# EUROPEAN PATENT APPLICATION

(11) **EP 4 776 195 A1**
(43) Date of publication of application: **15.07.2026**
(21) Application number: 25150602.8
(22) Date of filing: 08.01.2025
(51) Int. Cl.: G06Q 10/04, B60L 15/38, B60L 58/00, G06Q 50/40, G07C 5/00, G08G 1/00

(54) **SYSTEM DESIGNED TO ASSIST VEHICLES AND/OR FLEET MANAGEMENT SYSTEMS IN PREDICTING FUTURE ENERGY CONSUMPTION**

(71) Applicant: Scania CV AB, 151 87 Södertälje (SE)
(72) Inventor: CARLGREN, Magnus, 571 93 Nässjö (SE); BERGLUND, Martin, 619 73 Vagnhärad (SE)
(74) Representative: Scania CV AB

(57) **Abstract**

A system (1) designed to assist individual vehicles (20, 21, 22, 23), and/or fleet management systems (30), in predicting future energy consumption of an individual vehicle (20, 21, 22, 23) is described. The system (1) is configured to collect data from a plurality of vehicles (20, 21, 22, 23), said data comprising geographic position, date and time of stops (S, S1, S2, S3, S4, S5), and vehicle load change (ΔVL) at the respective stops (S, S1, S2, S3, S4, S5). The system (1) is further configured to process the collected data. Moreover, the system (1) is configured to, based on the processed data, predict change in vehicle load (ΔVL) for an individual vehicle (20, 21, 22, 23) at one or more predefined upcoming stops (S, S1, S2, S3, S4, S5) of said individual vehicle (20, 21, 22, 23). The system (1) is also configured to communicate the predicted change in vehicle load at the one or more predefined upcoming stops (S, S1, S2, S3, S4, S5) to the individual vehicle (20, 21, 22, 23) and/or a fleet management system (30) associated with said individual vehicle. The disclosure further relates to a method, performed by the system (1), for assisting an individual vehicle (20, 21, 22, 23) or fleet management system (30) associated with the individual vehicle.

## Description

### TECHNICAL FIELD

The present disclosure relates to a system designed to assist individual vehicles, and/or fleet management systems, in predicting future energy consumption of an individual vehicle. The present disclosure also relates to a method for assisting an individual vehicle, and/or a fleet management system associated with said individual vehicle, in predicting future energy consumption of the individual vehicle. The present disclosure also relates to a computer program as well as a computer-readable medium. Moreover, the present disclosure relates to a method for predicting future energy consumption of an individual vehicle.

### BACKGROUND

The ability to predict future energy consumption of a vehicle, such as a heavy-duty vehicle, is an important aspect, for example, to allow determining how much energy needs to be stored onboard (e.g., as fuel and/or as stored electric energy) before commencing a driving assignment. The energy consumption of a vehicle is affected by numerous factors, including for example vehicle configuration, gross weight (i.e. the total weight including the weight of the vehicle itself and any potential vehicle load, e.g., due to cargo or passenger), characteristics of the route (such as topography, curvature, road conditions) travelled by the vehicle, vehicle speed etc. To obtain a good prediction about the vehicle's future energy consumption, the gross weight of the vehicle is one of the most important factors. However, the gross weight of a heavy-duty or medium-duty vehicle may vary greatly during a driving assignment, and may often not be known in advance.

The difficulties in accurately predicting future energy consumption of the vehicle mean that considerable margins in terms of energy stored onboard the vehicle are typically needed, which is particularly cumbersome for commercial heavy-duty or medium-duty vehicles driven partly or fully on stored electric energy (such a fully electric vehicles and plug-in hybrid vehicles). This is because unplanned/unexpected stops for charging may have a considerable negative impact on total cost of operation of the vehicle both in terms of the unplanned interruption of a driving assignment and an increased risk of having to charge at locations or hours where the charging fares are higher. However, charging, before a planned driving assignment, more than actually needed to perform the driving assignment may increase the wear of the energy storage device of the vehicle and thereby contribute to a shortening of the life span thereof. Furthermore, the time needed for charging may be unduly increased. These factors also have a direct negative impact on the total cost of operation of the vehicle. Thus, planning of when and where to charge a vehicle, as well as how much the energy storage device should be charged, are very important factors for a vehicle owner as they have a high impact on the total cost of operation.

DE102017008823A1 discloses a method for determining the range of a commercial vehicle. According to the method, a required amount of energy to reach a destination is determined depending on a planned route. Moreover, a vehicle weight is taken into account depending on freight data when determining the required amount of energy. However, freight data (or similar data relating to future vehicle load) may not always be known to a vehicle in advance of a driving assignment. For example, the total weight of passengers that will board or leave a bus at each respective bus stop, or the weight of the waste that is to be picked up at one or more collection stations for a garbage truck, or the weight of timber that is to be picked up by a timber truck at particular sites, may not be known in advance. This in turn means that the future energy consumption of the vehicle cannot be accurately predicted.

CN109668571A proposes a method for planning a path of an all-electric garbage truck based on electric quantity prediction and intelligent energy management. The method comprises obtaining garbage mass of each garbage collection station through a weighing sensor on the truck when collecting garbage each time, and predicting garbage amount of each station in the future based on statistics and self-learning of the truck. It is described that the method is capable of considering the influence of loading mass of the garbage truck on the energy consumption. However, the proposed method is only applicable to the particular vehicle in which it is performed. This means that if the vehicle needs to be taken out of service one day by the hauler, the hauler cannot take advantage of knowledge of the vehicle when performing the same driving assignment with a replacement vehicle. Moreover, the method requires a completely new self-learning process in case the vehicle should operate in a new geographical area at which it has not previously collected garbage before taking advantage of the method, which may take considerable time. Therefore, also in this case, situations may arise where the future energy consumption of the vehicle may not be accurately predicted.

### SUMMARY

The object of the present invention is to improve the ability to accurately predict future energy consumption of a vehicle in cases where gross weight of the vehicle may vary e.g., during a driving assignment.

The object is achieved by the subject-matter of the appended independent claim(s).

The present disclosure relates to a system designed to assist individual vehicles, and/or fleet management systems, in predicting future energy consumption of an individual vehicle. The system is configured to collect data from a plurality of vehicles, said data comprising geographic position, date and time of stops. Said data further comprise vehicle load change at the respective stops. The system is further configured to process the collected data. Moreover, the system is configured to, based on the processed data, predict change in vehicle load for an individual vehicle at one or more predefined upcoming stops of said individual vehicle. The system is also configured to communicate the predicted change in vehicle load at the one or more predefined upcoming stops to the individual vehicle and/or a fleet management system associated with said individual vehicle.

The system described above allows for predicting future energy consumption of a vehicle even in cases where upcoming variations in gross weight of the vehicle is unknown to the individual vehicle and/or fleet management system associated with said vehicle, or cannot be sufficiently accurately predicted by the individual vehicle and/or the fleet management system itself. This in turn allows for an owner of the individual vehicle to improve total cost of operation of the individual vehicle.

For example, improved ability for predicting future energy consumption of a vehicle allows for reducing the margins of energy stored onboard the vehicle before commencing a driving assignment. This is particularly important in case of electric or plug-in hybrid vehicles since charging an energy storage device of the vehicle to an unnecessary high state of charge may increase the wear of the energy storage device and thereby reduce the life span thereof. Furthermore, charging the energy storage device more than needed may be associated with a prolonged time for the vehicle being out of service for charging. Both of these factors affects the total cost of operation of the vehicle.

Furthermore, improved ability for predicting future energy consumption of a vehicle for a driving assignment also allows for comparing different alternatives of performing the driving assignment, such as different route options, and selecting the most energy efficient and/or time efficient alternative. This also contributes to improved total cost of operation of the vehicle.

The system may further be configured to collect data comprising vehicle configuration and/or type of vehicle from said plurality of vehicles. Among other things, this allows for utilizing the system for assisting individual vehicles, or the fleet management system associate therewith, of different vehicle configurations and categories, and thereby avoids the need for setting up different systems for different vehicle configurations and/or vehicle categories. Furthermore, this allows for increasing the accuracy when predicting change in vehicle load for an individual vehicle at the one or more predefined upcoming stops of said individual vehicle, in case the system is set up for different vehicle configurations and/or vehicle categories.

The system may further be configured to collect data from the plurality of vehicles regarding routes taken by the plurality of vehicles. This may further improve the accuracy in the predicted change in vehicle load for an individual vehicle at the one or more predefined upcoming stops of said individual vehicle. In some cases, the change in vehicle load of a vehicle of the plurality of vehicles at different stops may differ depending on the order in which the stops are taken, for example due to the vehicle reaching its maximum gross weight before reaching its last planned pick-up stop if travelling a certain route. Moreover, energy consumption of the vehicle may vary depending on the route taken, and the route may therefore be relevant when predicting future energy consumption of an individual vehicle. An example might be a garbage truck that is supposed to collect garbage at predefined stops in a city with many hills that require the garbage truck to travel up and down streets, but without the route between stops being predefined for a driver. In such a case, and the garbage truck collects different weights at the different stops and/or drives uphill or downhill to and from the respective stops, this could have a significant effect the energy consumption (including amount of energy that may be regenerated during braking), depending on the order in which the stops are made, as the vehicle may have different weights when traveling uphill or downhill.

The system may further be configured to collect data from the plurality of vehicles regarding category of driving assignment(s). This may further contribute to improved accuracy in the predicted change in vehicle load for an individual vehicle at the one or more predefined upcoming stops of said individual vehicle.

The system may be configured to process the collected data by categorizing the collected data in dependence of date and time of stops, vehicle configuration, type of vehicle, route, and/or category of driving assignment. This facilitates making predictions of change in vehicle load for an individual vehicle at the one or more predefined upcoming stops of said individual vehicle, e.g., as not all of the collected data need to be considered for each prediction for an individual vehicle. Moreover, this allows for more accurate predictions of change in vehicle load as only the part of the data collected from the plurality of vehicles which is relevant for the individual vehicle can be considered when the system makes the prediction.

Additionally, or alternatively, the system may be configured to process the collected data through statistical analysis. This e.g., allows for improved predictions of change in vehicle load for individual vehicles at the one or more predefined upcoming stops of the individual vehicles.

The system may suitably be configured to monitor the plurality of vehicles for the purpose of continuously or regularly collecting said data from the plurality of vehicles. Thereby, the historical data resulting from the collection of data from the plurality of vehicles may be updated overtime, which further improves predictions of change in vehicle load for individual vehicles at the one or more predefined upcoming stops of the individual vehicles.

The system described above may suitably be a cloud-based system. A cloud-based system offers numerous advantages over traditional server based systems (e.g. on-premises or locally hosted server systems). The benefits for example relate to the cloud's scalability, flexibility and cost-effectiveness. In particular, a cloud-based system allows for assisting a considerably larger number of individual vehicles and/or fleet management systems and is not limited in respect of geographic area, but allows for usage globally.

The system may be a back-end system. A back-end system for example has the advantage of a centralized data management, allowing for processing and storing data in a structured and secure manner. Furthermore, this may ensure consistency in the predictions of change of vehicle load for individual vehicles, and allows for integration with multiple end users (such as control arrangements of individual vehicles and/or fleet management systems).

The present disclosure also relates to a method, performed by the above described system, for assisting an individual vehicle, and/or a fleet management system associated with said individual vehicle, in predicting future energy consumption of the individual vehicle. The method comprises a step of, upon a request from the individual vehicle or the fleet management system, predicting change in vehicle load for the individual vehicle at one or more predefined upcoming stops for said individual vehicle based on historical data collected from a plurality of vehicles. Said historical comprises at least geographic position, date, and time of stops performed by the plurality of vehicles, and vehicle load change of the respective vehicles of the plurality of vehicles at the respective stops. The method further comprises a step of communicating the predicted change in vehicle load at the one or more predefined upcoming stops to the individual vehicle or the fleet management system.

By means of the above described method, an individual vehicle and/or fleet management system associate with the individual vehicle may predict future energy consumption of the individual vehicle even in situations where the changes in gross weight for an upcoming driving assignment is not known by the individual vehicle or fleet management system in other ways. This in turn allows for improved abilities e.g., to plan and ensure that an appropriate amount of energy is stored onboard the individual vehicle before commencing a driving assignment, and/or planning the driving assignment for improving total cost of operation of the individual vehicle.

In the above described method, the step of predicting change in vehicle load for the individual vehicle at the one or more predefined upcoming stops may be made in dependence of date and time at which the individual vehicle is expected to reach the one or more predefined upcoming stops. This further improves the accuracy in the predicted vehicle load change for the individual vehicle, which inherently also leads to an improved prediction of future energy consumption.

Additionally, or alternatively, the step of predicting change in vehicle load for the individual vehicle at the one or more predefined upcoming stops may be made in dependence of vehicle configuration and/or type of vehicle of the individual vehicle. This further contributes to improved accuracy in the predicted vehicle load change for the individual vehicle, and thus also allows for an improved accuracy of the prediction of future energy consumption of the individual vehicle.

Additionally, or alternatively, the step of predicting change in vehicle load for the individual vehicle at the one or more predefined upcoming stops may be made in dependence of category and/or a planned route of a driving assignment to be performed by the individual vehicle. This also contributes to improved accuracy in the predicted vehicle load change for the individual vehicle, and thus also allows for an improved accuracy in the prediction of future energy consumption of the individual vehicle.

The present disclosure further relates to a computer program comprising instructions which, when executed by the above described system designed to assist individual vehicles, and/or fleet management systems, in predicting future energy consumption of an individual vehicle, cause the system to carry out the above described method for assisting an individual vehicle, and/or a fleet management system associated with said individual vehicle.

Moreover, the present disclosure relates to a computer-readable medium having stored thereon the computer program described above.

The present disclosure also relates to a method, performed by a control arrangement of an individual vehicle or a fleet management system associated with said individual vehicle, for predicting future energy consumption of the individual vehicle. Said method comprises a step of, when changes in vehicle load for a planned driving assignment is unknown by the individual vehicle or fleet management system, requesting predicted change in vehicle load for the individual vehicle at each planned stop of the driving assignment from the above described system designed to assist individual vehicles, and/or fleet management systems. Moreover, the method comprises a step of predicting future energy consumption for the driving assignment in consideration of the predicted change in vehicle load received from said system.

The above described method for predicting future energy consumption of the individual vehicle facilitates determining the appropriate amount of energy that needs to be stored onboard the vehicle for performing the planned driving assignment. Furthermore, the method allows for better planning of the driving assignment, such as route selection, to improve total cost of operation of the individual vehicle.

### BRIEF DESCRIPTION OF DRAWINGS

- Fig. 1: schematically illustrates one exemplifying embodiment of the herein described system designed to assist individual vehicles, and/or fleet management systems, in predicting future energy consumption of an individual vehicle,
- Fig. 2: schematically illustrates an example of a vehicle which is about to perform a driving assignment comprising a plurality of stops, a predicted change in load at the respective stops, as well as predicted propulsion power needed and predicted state of charge,
- Fig. 3: schematically illustrates an example of a map showing a network of different roads and a plurality of predefined possible stop points, and
- Fig. 4: represents a flowchart schematically illustrating one exemplifying embodiment of the herein described method for assisting an individual vehicle or a fleet management system associated with said individual vehicle, in predicting future energy consumption of the individual vehicle.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

The herein described system is designed to assist individual vehicles, and/or fleet management systems, in predicting future energy consumption of an individual vehicle. More specifically, the system is designed to assist individual vehicles, and/or fleet management systems, by providing information relevant for predicting future energy consumption of an individual vehicle to one or more individual vehicles and/or fleet management systems. The predicted future energy consumption may then be used, e.g., for determining how much energy that needs to be stored onboard the individual vehicle (e.g., as state of charge and/or amount of fuel) before starting a driving assignment and/or for route planning of the individual vehicle. The predicted future energy consumption may additionally, or alternatively, be used for determining available range for the individual vehicle based on the amount of energy stored onboard. The available range based on amount of energy stored onboard a vehicle is commonly referred to as distance-to-empty in the art. Such a distance-to-empty may for example be communicated to a driver of the individual vehicle to allow the driver to take informed decisions, and/or give the driver the confidence that a route can be completed without additional charging of the vehicle along the route. Furthermore, the predicted future energy consumption of the individual vehicle may be used for determining whether the individual vehicle can complete a mission (typically a driving assignment), or whether the individual vehicle will have to make several turns and/or additional vehicles (e.g., several vehicles of a fleet) are needed to complete the mission.

The herein described system is configured to collect data from a plurality of vehicles, wherein said data comprise at least geographic position, date and time of stops, as well as vehicle load change at the respective stops. It should here be noted that vehicle load change at the respective stops may alternatively be collected as a change in gross weight without departing from the present disclosure. Preferably, said data further comprise vehicle configuration and/or type of vehicle. Examples of different types of vehicle may include garbage truck, gravel truck, delivery truck, city bus, school bus, long-haulage bus, etc. Moreover, the data may advantageously also comprise data regarding routes taken by the plurality of vehicles (said routes comprising the stops) and/or data regarding category of driving assignment(s). Examples of categories of driving assignments could for example include scheduled bus services (such as bus line traffic), construction transport, recycling collection, or package delivery.

The system may suitably be configured to collect the above mentioned data from a large number of vehicles, such as at least 100 vehicles, or preferably at least 500, or at least 1000 vehicles. It should however be noted that it is also possible to set up the system to collect data for a smaller number of vehicles, if desired. In such a case, the system may typically be set up for a certain type of vehicle, geographic location, or category of driving assignments.

The system is further configured to process the collected data, such as by categorizing the collected data and/or performing statistical analysis of the collected data. For example, the system may be configured to categorize the collected data in dependence of date and time of stops, vehicle configuration, type of vehicle, route, and/or category of driving assignment.

Moreover, the system is configured to store the collected data in one or more databases, either in as collected form and/or in as processed form. In other words, the system is configured to store the data collected from the plurality of vehicles as historical data.

The system is further configured to, based on the processed data, predict change in vehicle load for an individual vehicle at one or more predefined upcoming stops of said individual vehicle. The system may be configured to predict change in vehicle load for an individual vehicle at the one or more predefined upcoming stops in dependence of the categorized data. Moreover, the system may be configured to perform said prediction in response to a request from the individual vehicle or from a fleet management system associated with said individual vehicle. It should here be noted that such a request may typically contain information regarding the one or more predefined upcoming stops, such as geographic position and suitably also planned day and time of said upcoming stop(s). This could for example be achieved by the request containing information regarding planned driving assignment for the individual vehicle.

The system is further configured to communicate the predicted change in vehicle load at the one or more predefined upcoming stops to the individual vehicle and/or fleet management system associated with the individual vehicle. This allows for a control arrangement of the individual vehicle and/or fleet management system to predict future energy consumption of the individual vehicle in consideration of the predicted change in vehicle load at the one or more upcoming stops.

The herein described system may suitably be configured to monitor the plurality of vehicles for the purpose of continuously or regularly collecting the above described data from the plurality of vehicles. It should here be noted that "continuously or regularly collecting" is intended to be interpreted broadly, and thus encompass e.g., both collection as soon as a vehicle of the plurality of vehicles has performed a stop associated with a possible change in vehicle load, or collecting historical data, stored e.g., by the vehicle, from said vehicle from time to time. Through such a monitoring for the purpose of collecting data, the data stored by the system may be regularly updated and improved, which in turn contributes to improved predictions of change in vehicle load. Moreover, vehicles may be added or removed from the plurality of vehicles over time as needed or appropriate.

The herein described system is a computer-based system. More specifically, the herein described system is a server based system, and preferably a cloud-based system. Furthermore, the herein described system may suitably be set up as a back-end system.

It should be noted that the herein described system designed to assist individual vehicles and/or fleet management systems is a system separate from a fleet management system, since a fleet management system is typically set up specifically for a hauler or the like. The herein described system is however primarily developed to be used by different vehicle and fleet owners. The herein described system may for example be a vehicle manufacturer system.

The present disclosure further relates to a method for assisting an individual vehicle, and/or a fleet management system associated with said individual vehicle, in predicting future energy consumption of the vehicle. Said method is performed by the above described system designed to assist individual vehicles, and/or fleet management systems. More specifically, the present disclosure relates to a method for assisting the individual vehicle or the fleet management system by providing information relevant when predicting future energy consumption of the individual vehicle. The method comprises a step of, upon a request from the individual vehicle or the fleet management system, predicting change in vehicle load for the individual vehicle at one or more predefined upcoming stops for said individual vehicle based on historical data collected from a plurality of vehicles, wherein said historical data comprise at least geographic position, date, and time of stops performed by the plurality of vehicles, and vehicle load change of the respective vehicles of the plurality of vehicles at the respective stops. The method further comprises a step of communicating the predicted change in vehicle load at the one or more predefined upcoming stops to the individual vehicle or the fleet management system.

The step of predicting change in vehicle load for the individual vehicle at the one or more predefined upcoming stops may suitably be made in dependence of date and time at which the individual vehicle is expected to reach the one or more predefined upcoming stops. The reason therefore is that change in vehicle load may vary between different dates and times. Considering for example a city bus, the number of passengers boarding during rush hour on a weekday may be considerably higher than the amount of passengers boarding late a Sunday evening, even if the city bus is performing the same driving assignment. Therefore, it is advisable to also consider the date and time at which the individual vehicle is expected to reach the one or more predefined upcoming stops, if known (i.e. specified in the request to the system), for improving the accuracy of the prediction.

Furthermore, vehicle in case the system is set up to take into account different vehicle configurations and/or types of vehicle (which is typically desirable), the step of predicting change in vehicle load for the individual vehicle at the one or more predefined upcoming stops may suitably be made in dependence of vehicle configuration and/or type of vehicle of the individual. This improves the accuracy of the prediction of the change in vehicle load as it ensures that it is made using the relevant data therefore. As an example, historical data relating to a delivery truck may not be relevant when predicting changes in load for a garbage truck, even if the route travelled and stops of these vehicles would coincide, and could therefore reduce the accuracy in the prediction for the garbage truck.

Additionally, or alternatively, the step of predicting change in vehicle load for the individual vehicle at the one or more predefined upcoming stops may suitably be made in dependence of category of driving assignment to be performed and/or planned route of the driving assignment to be performed by the individual vehicle. This also contributes to improved accuracy of the predicted change in vehicle load. The reason therefore is that each of the category of driving assignment and the route to be taken by the individual may affect the predicted change in vehicle load. Therefore, the most accurate prediction of change in vehicle load may be achieved when comparing with historical data collected from vehicles having performed essentially the same, or at least a similar, driving assignment and taken the same route as intended to be taken by the individual vehicle.

The performance of the herein described method for assisting an individual vehicle, and/or a fleet management system associated with said individual vehicle, in predicting future energy consumption of the individual vehicle, may be governed by programmed instructions. These programmed instructions may take the form of a computer program which, when executed by a computer, cause the computer to effect desired forms of control action. Such a computer may for example be comprised in the herein described system designed to assist individual vehicles, and/or fleet management systems. The present disclosure thus also relates to a computer program comprising instructions which, when performed by the herein described system, cause the system to carry out the method for assisting an individual vehicle, and/or a fleet management system associated with said individual vehicle.

The above described programmed instructions, which may take the form of a computer program, may be stored on a computer-readable medium. Hence, the present disclosure also relates to a computer-readable medium having stored thereon the computer program described above. The computer-readable medium may be a non-transitory computer-readable medium, such as a tangible electronic, magnetic, optical, infrared, electromagnetic, and/or semiconductor system, apparatus, and/or device.

The present disclosure also relates to a method, performed by a control arrangement of an individual vehicle or a fleet management system associated with the individual vehicle, for predicting future energy consumption of the individual vehicle. Said method comprises a step of, when changes in vehicle load for a planned driving assignment is unknown by the individual vehicle or fleet management system, requesting predicted change in vehicle load for the individual vehicle at each planned stop of the driving assignment from the above described system designed to assist individual vehicles and/or fleet management systems. The method further comprises predicting future energy consumption for the driving assignment in consideration of the predicted change in vehicle load as received from the system. The step of predicting future energy consumption may naturally also take into account curb weight of the individual vehicle, characteristics of the route of the planned driving assignment (such as topography, curvatures, speed limits etc.), and other factors affecting the energy consumption of the vehicle.

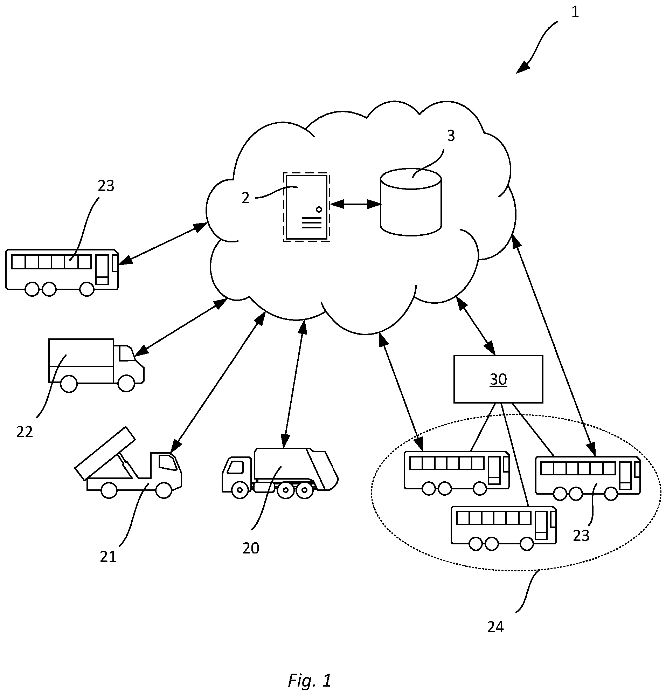

Figure 1 schematically illustrates one exemplifying embodiment of the herein described system 1 designed to assist individual vehicles, and/or fleet management systems, in predicting future energy consumption of an individual vehicle. The system 1 is here illustrated as a cloud-based system. The system 1 according to the exemplifying embodiment may comprise one or more virtual servers 2 (only one shown) and one or more databases 3 (only one shown) configured to store historical data. It should be noted that the system 1 need not comprise only virtual server(s) 2, but could also comprise one or more physical servers.

The system 1 is configured to collect data from a plurality of vehicles, in the figure represented by a garbage truck 20, a gravel truck 21, a delivery truck 22, and a bus 23. The system 1 is thus configured to communicate with a plurality of vehicles for the purpose of collecting data therefrom. As previously mentioned, said data comprise at least geographic position, date, and time of stops, and vehicle load change at the respective stops. Suitably, said data further comprise vehicle configuration and/or type of vehicle, routes taken by the plurality of vehicles (said routes comprising the stops), and/or category of driving assignment(s) performed.

The system 1 is suitably configured to collect the data directly from the plurality of vehicles, but may also collect said data via a fleet management system 30 associated with a fleet 24 (in the figure shown as comprising a plurality of buses).

The system 1 is further configured to process the collected data and store it in the one or more databases 3, such that the data may be retrieved and used by the system when needed. The processing of the collected data may for example be performed by the one or more servers 2. Processing of the collected data may involve categorizing the collected data and/or statistical analysis thereof.

Moreover, the system 1 is configured to, based on the processed data, predict change in vehicle load for an individual vehicle (such as any one of the garbage truck 20, the gravel truck 21, the delivery truck 22, the bus 23, or a vehicle of the fleet 24) at one or more predefined upcoming stops of said individual vehicle. This may be performed through usage of the one or more servers 2.

The system 1 is furthermore configured to communicate the predicted change in vehicle load for an individual vehicle at one or more predefined upcoming stops to the individual vehicle or, where applicable, the fleet management system 30 associated with said individual vehicle. As previously mentioned, the individual vehicle may be any one of the garbage truck 20, the gravel truck 21, the delivery truck 22, the bus 23, or a vehicle of the fleet 24.

It should here be noted that, although it is illustrated in the figure that the system 1 may collect data from the same individual vehicle (in the figure the garbage truck 20, the gravel truck 21, the delivery truck 22, the bus 23, or a vehicle of the fleet 24) for which a prediction of change in vehicle load at one or more predefined upcoming stops is made, and to which communication of said prediction is made, the present disclosure is not limited thereto. The reason for the system 1 being configured to collect data from the same vehicle for which a prediction of change in vehicle load may be made is that the vehicle may later on be intended to perform another driving assignment (other than the one from which the system has collected data), and may therefore need to receive predictions of change in vehicle load at one or more upcoming stops of the new driving assignment. Furthermore, although not illustrated in the figure, the system 1 may collect the above discussed data from vehicles for which a prediction of change of vehicle load may never be needed.

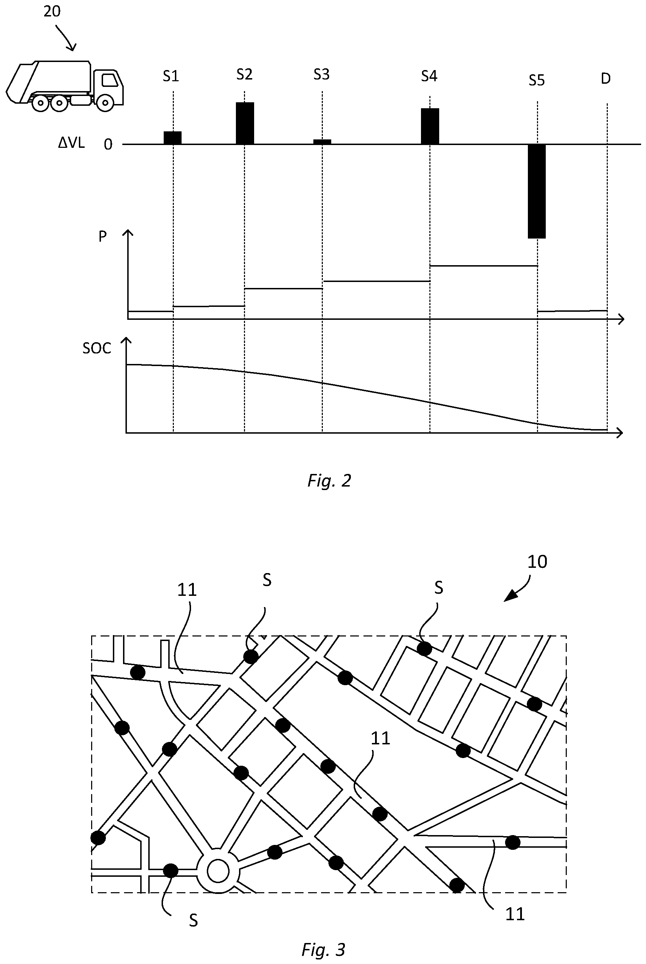

Figure 2 schematically illustrates an example of a vehicle, here a garbage truck 20, which is about to perform a driving assignment comprising five different stops, S1, S2, S3, S4, S5 before reaching its destination D, such as a home depot. The figure also illustrates predicted change in vehicle load ΔVL, which may occur due to pick-up or delivery of municipal waste. It can be seen from the figure that each of the stops S1, S2, S3, S4 represents pick-up stops with varying increase in predicted vehicle load. Stop S5, however, represents a stop where the garbage truck 20 leaves the municipal waste. This means that the predicted change in vehicle load is negative.

The figure also illustrates predicted power propulsion power need P and predicted state of charge SOC of an energy storage device of the vehicle for performing the driving assignment. The illustrated garbage truck 20 is here assumed to be an electric vehicle, and is thus dependent on the energy stored in the energy storage device thereof for providing the propulsion power needed. For ease of illustration, it is here assumed that the vehicle is travelling on a flat road and any transients in predicted propulsion power needed are ignored.

In the illustrated example, the predicted propulsion power need P is relatively low before the garbage truck 20 reaches the first stop S1 and thereafter increases due to the predicted change in vehicle load. Thus, the predicted SOD decreases slowly until stop S1 is reached, and thereafter decreases more rapidly. Furthermore, due to the predicted changes in vehicle load ΔVL occurring at each of the subsequent stops S2, S3, and S4, the predicted propulsion power needed P also increases after each respective stop. This in turn also leads to a more rapid decrease in the predicted SOC. However, after stop S5, at which the predicted change in vehicle load ΔVL is negative, the predicted propulsion power needed is drastically decreased which also leads to a slower decrease in predicted SOC.

From the illustrated example, it can easily be understood the importance of being able to sufficiently accurately predict the change in vehicle load that may occur at each respective stop of a driving assignment. Otherwise, there is a risk that the garbage truck 20 may not be able to complete the driving assignment before the energy storage device reaching a too low SOC, and may even risk that the garbage truck 20 has to be towed, due to having been charged to a too low SOC before commencing the driving assignment. On the other hand, an unduly high SOC before start of the driving assignment may lead to an increase in total cost of operation for the garbage truck 20.

Figure 3 schematically illustrates an example of a map 10 showing a network of different roads 11. The roads 11 of said road network present a plurality of different route options for a vehicle operated in the geographical area of the map 10. The map 10 also comprises a plurality of predefined possible stop points S (illustrated as black dots in the figure) for a vehicle, such as the garbage truck 20 shown in Figure 1. The plurality of predefined possible stop points S may for example constitute pick-up points, delivery points and/or bus stops. The plurality of predefined possible stop points S may be specific for a certain type of vehicle and/or for a certain driving assignment of a vehicle. For a vehicle performing a driving assignment comprising visiting at least some of the predefined stops S, the route between the stops may be predefined. In such a case, it may be advisable to take into account the route also when predicting changes in vehicle load as well as future energy consumption of the vehicle.

Moreover, in case the route has not been selected in advance, a prediction of future energy consumption of the vehicle for different routes may help to select the most appropriate route in terms of energy consumption before commencing the driving assignment.

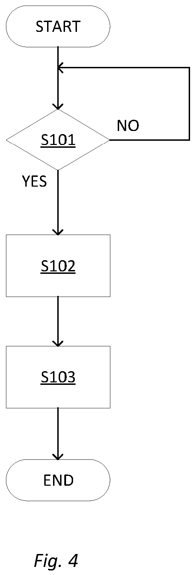

Figure 4 represents a flowchart schematically illustrating one exemplifying embodiment of the herein described method for assisting an individual vehicle (such as any one the garbage truck 20, the gravel truck 21, the delivery truck 22, the bus 23, or a vehicle of the fleet 24 illustrated in Figure 1) or a fleet management system (cf. fleet management system 30 shown in Figure 1) associated with said individual vehicle, in predicting future energy consumption of the individual vehicle.

The method comprises a first step S101 of determining whether a request from the individual vehicle or the fleet management system for receiving a prediction of change in vehicle load at one or more predefined upcoming stops for the individual vehicle has been received. If this is not the case, the method may revert to start. However, if such a request has been received, the method proceeds to a step S102.

Step S102 comprises predicting change in vehicle load for the individual vehicle at one or more predefined upcoming stops for said individual vehicle based on historical data collected from a plurality of vehicles, wherein said historical data comprise at least geographic position, date, and time of stops performed by the plurality of vehicles, and vehicle load change of the respective vehicles of the plurality of vehicles at the respective stops.

After step S102, the method proceeds to a step S103 of communicating the predicted change in vehicle load at the one or more predefined upcoming stops to the individual vehicle or the fleet management system. After step S103, the method may be ended as shown in the figure, or revert to start, as desired.

## Claims

1. A system (1) designed to assist individual vehicles (20, 21, 22, 23), and/or fleet management systems (30), in predicting future energy consumption of an individual vehicle (20, 21, 22, 23),
the system (1) being configured to:
- collect data from a plurality of vehicles (20, 21, 22, 23), said data comprising geographic position, date, and time of stops (S, S1, S2, S3, S4, S5), and vehicle load change (ΔVL) at the respective stops;
- process the collected data;
- based on the processed data, predict change in vehicle load (ΔVL) for an individual vehicle (20, 21, 22, 23) at one or more predefined upcoming stops (S, S1, S2, S3, S4, S5) of said individual vehicle (20, 21, 22, 23); and
- communicate the predicted change in vehicle load (ΔVL) at the one or more predefined upcoming stops (S, S1, S2, S3, S4, S5) to the individual vehicle (20, 21, 22, 23) and/or to a fleet management system (30) associated with said individual vehicle (20, 21, 22, 23).

2. The system (1) according to claim 1, further configured to collect data comprising vehicle configuration and/or type of vehicle from said plurality of vehicles (20, 21, 22, 23).

3. The system (1) according to any one of claims 1 or 2, further configured to collect data from the plurality of vehicles (20, 21, 22, 23) regarding routes taken by the plurality of vehicles (20, 21, 22, 23).

4. The system (1) according to any one of the preceding claims, further configured to collect data from the plurality of vehicles (20, 21, 22, 23) regarding category of driving assignment(s).

5. The system (1) according to any one of the preceding claims, wherein the system (1) is configured to process the collected data by categorizing the collected data in dependence of date and time of stops (S, S1, S2, S3, S4, S5), vehicle configuration, type of vehicle, route, and/or category of driving assignment.

6. The system (1) according to any one of the preceding claims, wherein the system (1) is configured to process the collected data through statistical analysis.

7. The system (1) according to any one of the preceding claims, wherein the system (1) is configured to monitor the plurality of vehicles (20, 21, 22, 23) for the purpose of continuously or regularly collecting said data from the plurality of vehicles (20, 21, 22, 23).

8. The system (1) according to any one of the preceding claims, wherein the system (1) is a cloud-based system.

9. The system (1) according to any one of the preceding claims, wherein the system (1) is a back-end system.

10. A method, performed by the system (1) according to any one of the preceding claims, for assisting an individual vehicle (20, 21, 22, 23), and/or a fleet management system (30) associated with said individual vehicle (23), in predicting future energy consumption of the individual vehicle (20, 21, 22, 23),
the method comprising the steps of:
upon a request from the individual vehicle (20, 21, 22, 23) or the fleet management system (30), predicting (S102) change in vehicle load (ΔVL) for the individual vehicle (20, 21, 22, 23) at one or more predefined upcoming stops (S, S1, S2, S3, S4, S5) for said individual vehicle (20, 21, 22, 23) based on historical data collected from a plurality of vehicles (20, 21, 22, 23), wherein said historical data comprise at least geographic position, date, and time of stops (S, S1, S2, S3, S4, S5) performed by the plurality of vehicles, and vehicle load change of the respective vehicles of the plurality of vehicles at the respective stops, and
communicating (S103) the predicted change in vehicle load (ΔVL) at the one or more predefined upcoming stops (S, S1, S2, S3, S4, S5) to the individual vehicle (20, 21, 22, 23) or the fleet management system (30).

11. The method according to claim 10, wherein the step of predicting change in vehicle load (ΔVL) for the individual vehicle (20, 21, 22, 23) at the one or more predefined upcoming stops is made in dependence of date and time at which the individual vehicle (20, 21, 22, 23) is expected to reach the one or more predefined upcoming stops (S, S1, S2, S3, S4, S5).

12. The method according to any oneof claims 10 and 11, wherein the step of predicting change in vehicle load (ΔVL) for the individual vehicle (20, 21, 22, 23) at the one or more predefined upcoming stops (S, S1, S2, S3, S4, S5) is made in dependence of vehicle configuration and/or type of vehicle of the individual vehicle (20, 21, 22, 23).

13. The method according to any one of claims 10 to 12, wherein the step of predicting change in vehicle load (ΔVL) for the individual vehicle (20, 21, 22, 23) at the one or more predefined upcoming stops (S, S1, S2, S3, S4, S5) is made in dependence of category and/or a planned route of a driving assignment to be performed by the individual vehicle (20, 21, 22, 23).

14. A computer program comprising instructions which, when executed by a system (1) in accordance with any one of claims 1 to 9, cause the system (1) to carry out the method according to any one of claims 10 to 13.

15. A computer-readable medium having stored thereon the computer program according to claim 14.

16. A method, performed by a control arrangement of an individual vehicle (20, 21, 22, 23) or a fleet management system (30) associated with said individual vehicle (20, 21, 22, 23), for predicting future energy consumption of the individual vehicle (20, 21, 22, 23), the method comprising the following steps:
when changes in vehicle load for a planned driving assignment is unknown by the individual vehicle (20, 21, 22, 23) or fleet management system (30), requesting predicted change in vehicle load (ΔVL) for the individual vehicle (20, 21, 22, 23) at each planned stop of the driving assignment from the system (1) according to any one of claims 1 to 9, and
predicting future energy consumption for the driving assignment in consideration of the predicted change in vehicle load (ΔVL) received from said system (1).
